Europäisches Patentamt

European Patent Office

Office européen des brevets

(19)

(11) Publication number: **0 196 842 B1**

# EUROPEAN PATENT SPECIFICATION

(45) Date of publication of patent specification: **21.08.91**   (51) Int. Cl.⁵: **B01D 53/34**

(21) Application number: **86302113.5**

(22) Date of filing: **21.03.86**

(54) **Improved method for reducing combustion effluent NOx emissions.**

(30) Priority: **22.03.85 US 715168**

(43) Date of publication of application:
**08.10.86 Bulletin 86/41**

(45) Publication of the grant of the patent:
**21.08.91 Bulletin 91/34**

(84) Designated Contracting States:
**BE CH DE FR GB IT LI NL SE**

(56) References cited:
**WO-A-85/02130**

(73) Proprietor: **EXXON RESEARCH AND ENGI-
NEERING COMPANY**
**P.O.Box 390, 180 Park Avenue**
**Florham Park, New Jersey 07932(US)**

(72) Inventor: **Hurst, Boyd Edward**
**21 Wherlie Road**
**Long Valley, NJ 07853(US)**

(74) Representative: **Somers, Harold Arnold et al**
**ESSO Engineering (Europe) Ltd. Patents &
Licences Mailpoint 72 Esso House Ermyn
Way**
**Leatherhead, Surrey KT22 8XE(GB)**

## Description

FIELD OF THE INVENTION

The present invention relates to a non-catalytic method for reducing the concentration of NO in gas turbine combustion effluents by the injection of ammonia. More particularly, the invention relates to the injection of ammonia into an isothermal or cooling zone of a post combustion gas turbine apparatus where the combustion effluent is at a temperature of 1100 to 1500° K (827 to 1227° C).

BACKGROUND OF THE INVENTION

Combustion effluents and waste products from various installations are a major source of air pollution when discharged into the atmosphere. A particularly troublesome pollutant found in many combustion effluent streams is nitrogen oxide, designated as $NO_x$ to collectively indicate the presence of more than one oxide, a major irritant in smog. Furthermore, it is believed that the principal oxide, $NO_2$, undergoes a series of reactions known as photo-chemical smog formation, in the presence of sunlight and hydrocarbons. The major source of $NO_2$ is NO, which to a large degree, is generated at such stationary installations as gas and oil-fired steam boilers for electric power plants, process heaters, incinerators, coal fired utility boilers, glass furnaces, cement kilns, oil field steam generators, and gas turbines.

Heretofore, attempts at achieving $NO_x$ reduction in gas turbines via $NH_3$ injection have failed due to the generally correct assessment that conditions very unfavourable to significant $NO_x$ reduction exist within the combustor. Namely that there are higher than optimum temperatures and very low residence times.

Thermal de-$NO_x$ technology developed at Exxon Research and Engineering teaches a method of $NO_x$ control which appears to be generally applicable to gas turbines. US-A-3900554 to Richard K. Lyon describes and claims a process for selectively reducing NO. in a combustion effluent, said process comprising the step of contacting an effluent stream containing NO in the presence of oxygen with a compound selected from the group consisting of ammonia, ammonium formate, ammonium oxalate, ammonium carbonate, and their aqueous solutions, said compound being present in an amount sufficient to provide an equivalent mole ratio of ammonia ranging from 0.4 to 10 moles per mole of NO, but not more than about 0.9 volume percent based on the total volume of said effluent stream, and in the presence of a reducing material in such a manner that the true temperature where said compound and said reducing material react with the NO containing combustion effluent ranges from 1300° to 2000° F (704.4 to 1093.3° C), whereby the NO is selectively reduced, said reducing material being one selected from the group consisting of paraffinic, olefinic and aromatic hydrocarbons, oxygenated hydrocarbons, sulfonated hydrocarbons, carbon monoxide and hydrogen, but not in an amount more than about 2 volume percent based on the total volume of said combustion effluent and the amount of oxygen is at least enough to have some oxygen left after oxidation of said compound and said reducing material.

Thus US-A-3900554 discloses that substantial $NO_x$ reduction can be achieved in the 1600° F (871.1° C) to 2000° F (1093.3° C) temperature range and in the presence of excess oxygen via $NH_3$ injection. Temperatures within this range do indeed exist within the gas turbine. However, important factors which are key to significant de-$NO_x$ performance in gas turbines are residence times and pressures. The above-stated patent document refers to a broad range of applicable residence times from 0.001 to 10 seconds, but the examples only use a 75 millisecond or greater residence time carried out at 1 atmosphere pressure (101.3 kPa). Typically, residence times within the gas turbine combustor are approximately 20-30 milliseconds which is far too low to achieve required $NO_x$ reductions at atmospheric pressure (101.3 kPa). Moreover, there is no disclosure or suggestion in US-A-3900554 of the combination of residence times and pressure ranges which have been found to be essential for successful reduction of $NO_x$ concentration in the combustion effluent from gas turbines, in accordance with the process of the present invention, as described below.

In U.S. Air Force report AFAPL-TR-72-80 entitled "Fuel Modification for Abatement of Aircraft Turbine Engine Oxides of Nitrogen Emissions" (October, 1972) fuel additives including ammonia-water and ammonia-water-methanol were used in aircraft turbine engines operating at (gauge) pressures of about 45-60 psig (310.3 to 413.7 kPa). The results reported showed only slight $NO_x$ reductions.

In a paper entitled "Exxon Thermal DeNO$_x$ Process for Stationary Combustion Sources" delivered May 25, 1982, the present inventor disclosed plots of ammonia add $NO_x$ concentration for utility boilers. However, the data presented does not disclose operations at superatmospheric pressure.

Adding a considerable excess of ammonia to reduce the $NO_x$ in the relatively short residence time in the turbine combustor is not desirable, since this would, to some extent, result in $NO_x$ emissions to the

EP 0 196 842 B1

atmosphere being replaced by NH₃ emissions. In addition, since NH₃ may be oxidized to produce NO under certain conditions, injection of a large excess of NH₃ into the gas turbine combustor may not result in a significant decrease in NO$_x$ emissions.

The limitation of thermal DeNO$_x$ technology as applied to gas turbines has been analyzed by C. P. Fenimore in "Combustion and Flames" Volume 37: pages 245-250 (1980). As presented by Fenimore, the NO reduction reaction by NH₃ is strongly influenced by the [OH] concentration. Thus, one can increase the rate of NO reduction by increasing [OH] concentration. Unfortunately, however, increasing [OH] causes a disproprtionate increase in the rate of the NH₃ + OH→NO reaction. Thus, any effort to improve the rate of NO reduction inevitably ruins the selectivity of the reaction and one is trapped in a situation in which NH₃ either reacts with good selectivity but too slowly, or it reacts fast enough but with poor selectivity, so that the net reduction of NO is poor. The effects of this conclusion were demonstrated by Fenimore based on lab tests conducted at conditions typical of gas turbine combustors but at atmospheric pressure.

In the "Proceedings of the American Flame Research Committee" 1984 International Symposium on Alternative Fuels and Hazardous Wastes, P.C.T. de Boer developed an extended NO$_x$ reaction model and used tee model to assess the potential for DeNO$_x$ in a gas turbine combustor. DeBoer concluded that the residence time in the combustor was not sufficient to produce a low level of NO$_x$ in the gas turbine emissions.

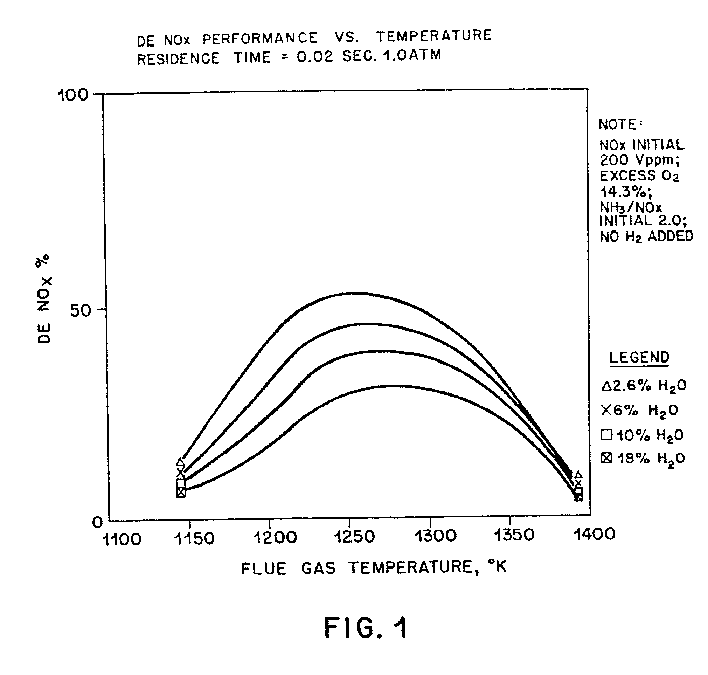

In addition, H₂O concentration in the flue gas plays a major role in the DeNO$_x$ reaction via NH₃ injection. This is illustrated by Figure 1 where increasing H₂O concentration has a significant inhibiting effect on DeNO$_x$ performance. Frequently, water or steam is injected into combustors, particularly gas turbine combustors, to lower the peak exhaust gas temperature and the NO$_x$ content of the combustion effluent. Thus, one would conclude that H₂O injection into gas turbine combustors for NO$_x$ reduction is somewhat incompatible with simultaneous NH₃ injection.

The analysis of model gas turbine systems to date has generally been based on laboratory DeNO$_x$ data taken at or near the specific temperature and residence time conditions within the combustor without considering elevated pressure. However, recently there has been developed a kinetic model utilizing the basic mechanism of NO$_x$ reduction via NH₃ injection considering both chemistry and physical properties including pressure. This model has been validated at atmospheric pressure with an extensive bank of experiments and at elevated pressure by limited experiments. Thus, it is now possible to conduct analyses via computer calculations without the need to perform specific experiments.

Use of this kinetic model has led to the surprising discovery that at conditions normally existing at the exit of the combustor, significant DeNO$_x$ can be achieved. At high pressures common to gas turbine combustors of 10-15 atmospheres (1013.57 to 1520.35 kPa), the thermal DeNO$_x$ reaction is positively and significantly affected even at relatively low residence times. Since the kinetic model calculations represent a performance limit, calculations have also been performed via a 2-dimensional turbulent flow model combined with the kinetic model to take into account the effects of mixing and temperature profiles in the combustor. These calculations confirm that significant DeNO$_x$ can be achieved through this invention.

Our co-pending European patent application No. 84904275.9, published under International Publication No. WO 85/02130, describes and claims a non-catalytic process for reducing the concentration of NO in a combustion effluent in which the combustion effluent contains NO and at least 0.1 volume percent oxygen and passes through at least one cooling zone at the upstream end of an isothermal zone, the process comprising adding ammonia to the combustion effluent while the temperature of the latter is in the range of from 975°K to 1600°K (702°C to 1327°C), cooling the mixture of combustion effluent and ammonia in the cooling zone at a rate of at least 50°K (50°C) per second, the amount of ammonia which is added to the combustion effluent being sufficient to reduce the amount of NO in the combustion effluent leaving the cooling zone relative to the amount therein before the addition of ammonia, the amount of ammonia added to the combustion effluent, and the location at which the ammonia is added to the effluent, being determined by the solution of the set of simultaneous equations derived from the kinetic model of the following Table:

3

## TABLE

## KINETIC MODEL

Rate constant $K = AT^n \exp(-E/(1.98)T)$

| | REACTION | A | n | E |
|---|---|---|---|---|
| 1. | $NH_3+H=NH_2+H_2$ | .246E+14 | 0.0 | 17071. |
| 2. | $NH_3+O=NH_2+OH$ | .150E+13 | 0.0 | 6040. |
| 3. | $NH_3+OH=NH_2+H_2O$ | .326E+13 | 0.0 | 2120. |
| 4. | $HNO+M=NO+H+M$ | .186E+17 | 0.0 | 48680. |
| 5. | $HNO+OH=NO+H_2O$ | .360E+14 | 0.0 | 0. |
| 6. | $NH_2+HNO=NH_3+NO$ | .175E+15 | 0.0 | 1000. |
| 7. | $NH_2+NO=NNH+OH$ | .610E+20 | -2.46 | 1866. |
| 8. | $NH_2+O_2=HNO+OH$ | .510E+14 | 0.0 | 30000. |
| 9. | $NNH+NH_2=N_2+NH_3$ | .100E+14 | 0.0 | 0. |
| 10. | $NH_2+O=NH+OH$ | .170E+14 | 0.0 | 1000. |
| 11. | $NH_2+OH=NH+H_2O$ | .549E+11 | 0.68 | 1290. |
| 12. | $NH_2+H=NH+H_2$ | .500E+12 | 0.5 | 2000. |
| 13. | $NH+O_2=NHO+O$ | .300E+14 | 0.0 | 3400. |
| 14. | $H_2+OH=H_2O+H$ | .220E+14 | 0.0 | 5150. |
| 15. | $H+O_2=OH+O$ | .220E+15 | 0.0 | 16800. |
| 16. | $O+H_2=OH+H$ | .180E+11 | 1.0 | 8900. |
| 17. | $H+HO_2=OH+OH$ | .250E+15 | 0.0 | 1900. |
| 18. | $O+HO_2=O_2+OH$ | .480E+15 | 0.0 | 1000. |
| 19. | $OH+HO_2=H_2O+O_2$ | .500E+14 | 0.0 | 1000. |
| 20. | $OH+OH=O+H_2O$ | .630E+13 | 0.0 | 1090. |
| 21. | $HO_2+NO=NO_2+OH$ | .343E+13 | 0.0 | -260. |
| 22. | $H+NO_2=NOOH$ | .350E+15 | 0.0 | 1500. |
| 23. | $O+NO_2=NO+O_2$ | .100E+14 | 0.0 | 600. |
| 24. | $H+O_2+M=HO_2+M$ $H_2O/21$ ** | .150E+16 | 0.0 | -995. |
| 25. | $NNH+M=N_2+H+M$ | .200E+15 | 0.0 | 30000. |
| 26. | $NO_2+M=NO+O+M$ | .110E+17 | 0.0 | 66000. |
| 27. | $NH_3+M=NH_2+H+M$ | .480E+17 | 0.0 | 93929. |
| 28. | $O+O+M=O_2+M$ | .138E+19 | -1.0 | 340. |
| 29. | $NH_2+NO=N_2+H_2O$ | .910E+20 | -2.46 | 1866. |
| 30. | $NNH+OH=N_2+H_2O$ | .300E+14 | 0.0 | 0. |
| 31. | $NNH+NO=N_2+HNO$ | .906E+12 | 0.0 | 0. |

**i.e. $A=21 \times .15E+16$ for $H_2O$ as "third body".

The combustion effluent is obtained, in particular, from stationary combustion equipment such as boilers, furnaces and incinerators, and WO 85/02130 does not mention combustion effluents derived from the operation of gas turbines.

The present invention provides a process for reducing $NO_x$ concentration in combustion effluent from a gas turbine containing at least 0.1 volume percent $O_2$ which comprises contacting the said effluent with ammonia, characterised in that the effluent is contacted with ammonia at one or more locations upstream of the turbine or fan at a temperature in the range of from 1100°K (827°C) to 1500°K (1227°C), at a pressure in the range from 10 to 100 atmospheres (1.0136 to 10.1357 MPa) and at a residence time in the range from 20 to 30 milliseconds.

The process of the invention results in a a reduction of NO in the combustion effluent which is greater than that achieved by carrying out the process under substantially similar conditions but at atmospheric pressure.

Water or steam may be added to cool the combustion effluent.

The ammonia may be injected in an amount and at a location determined by the solution of a set of simultaneous equations derived from the kinetic model of Table I hereinafter.

## BRIEF DESCRIPTION OF THE FIGURES

Figure 1 is a plot of % $NO_x$ reduction in a gas turbine vs. flue gas temperature in $^\circ K$ ($= ^\circ C + 273 ^\circ C$) at a residence time of 0.02 seconds and 1.0 atmosphere (0.10136 MPa) at four different levels of water concentration as calculated from a kinetic model.

Figure 2 is a plot of the sage variables described in Figure 1 except that the calculations were carried out at 13.6 atmospheres (1.37845 MPa).

Figures 3 and 4 are plots at about $1408 ^\circ K$ ($1135 ^\circ C$) and about $1450 ^\circ K$ ($1177 ^\circ C$), respectively, indicating the percentage of $NO_x$ reduction and also the ammonia breakthrough, in vppm at both 1 atmosphere (0.10136 MPa) and 13.6 atmospheres (1.37845 MPa), all as functions of the $NH_3$:$NO_x$ mole ratio.

Figures 5 and 6 are plots of the flue gas temperature vs. time from the point where ammonia is injected at about $1408 ^\circ K$ ($1135 ^\circ C$) and about $1450 ^\circ K$ ($1177 ^\circ C$), respectively.

## DETAILED DESCRIPTION OF THE INVENTION

As is well-known, combustion in a gas turbine is effected in a section of the equipment commonly referred to as a combustor. Generally, this is accomplished by igniting a suitable fuel, in the presence of air, in one or more combustors simultaneously. The principal combustion products are carbon dioxide and steam. These products, along with the other combustion products, such as carbon monoxide and the various oxides of nitrogen and sulfur, combined with any excess oxygen and unconverted nitrogen, form what is referred to herein as a combustion effluent. The combustion effluent normally will contain 0.1 to 16 volume percent oxygen.

The temperature of the combustion effluent typically is a maximum at or near the point of combustion and decreases axially (along tie flow path) and radially (outwardly) as the effluent moves along its flow path from the point of combustion until it is, ultimately, emitted to the atmosphere or otherwise loses its identity as a combustion effluent. The combustion effluent, passing through the combustion apparatus remains substantially isothermal in temperature after leaving the combustion zone in a gas turbine engine until it contacts the fan blade section, where it undergoes rapid cooling. The prior art suggests that the desired $NO_x$ reduction will not be possible in the gas turbine engine because of the relatively short residence times and high temperatures. However, by practice of the present invention, significant $NO_x$ reduction can be achieved at high temperatures immediately before and in a cooling zone.

The amount of ammonia used herein ranges from 0.5 to 10 moles, preferably 1 to 3 moles of ammonia, per mole of $NO_x$ to be removed.

As discussed more fully hereinafter the ammonia preferably is injected at the point at which the temperature is calculated to afford the greatest reduction in $NO_x$.

Although at temperatures in the range of 1100-1500 $^\circ K$ (827 to 1227 $^\circ C$) and short residence tiles it has been suggested that conventional non-catalytic DeNO$_x$ processes would be generally inoperative, the inventor hereof has identified a critical set of conditions whereby DeNO$_x$ may now be practiced on a combustion effluent in a 3 gas turbine. Furthermore, the practice of the present invention enables a more effective non-catalytic DeNO$_x$ operation at very short residence times down to about 2 milliseconds.

Because it is difficult to accurately simulate, on a laboratory scale, the temperature-time history of combustion effluents as they pass through a gas turbine , i t is necessary to generate examples by means other than laboratory experiments. Complex chemical reactions occur by a series of elementary reaction steps, and if one knows the rate constants for such steps, a theoretical kinetic mechanism can be developed and verified through comparison with experimental data. An extensive block of kinetic data previously was developed by use of apparatus similar to the apparatus taught in US-A-3,900,554 and used to determine which elementary reactions would likely be of significance during the reduction of NO by $NH_3$. For many of the reactions, the rate constants were well-known, accurately measured constants of nature. For the remaining reactions, the rate constants were not accurately known and, accordingly, were taken as adjustable parameters, i.e. values for the unknown rate constants were assumed, the reaction kinetics to be expected from these rate constants were calculated and compared with the observed kinetics. Based on this comparison, a new set of rate constants were assumed, etc., until satisfactory agreement between calculation and experimentation were finally obtained. The rate constants for each reaction are set forth in Table I. These rate constants do not contain pressure-related variables. The kinetic model hereof and respective rate constants were analyzed in a new approach by the inventor hereof from the standpoint of high pressure and short residence times for accurately predicting the conditions for the practice of the present invention.

## TABLE I

### KINETIC MODEL
### Rate constant $K = AT^n \exp [-E/(1.98)T]$
### $M$ = Any Other Compound

| REACTION | A | n | E |
|---|---|---|---|
| 1. $NH_3 + H = NH_2 + H_2$ | .246E+14 | 0.0 | 17071. |
| 2. $NH_3 + O = NH_2 + OH$ | .150E+13 | 0.0 | 6040. |
| 3. $NH_3 + OH = NH_2 + H_2O$ | .326E+13 | 0.0 | 2120. |
| 4. $HNO + M = NO + H + M$ | .186E+17 | 0.0 | 48680. |
| 5. $HNO + OH = NO + H_2O$ | .360E+14 | 0.0 | 0. |
| 6. $NH_2 + HNO = NH_3 + NO$ | .175E+15 | 0.0 | 1000. |
| 7. $NH_2 + NO = NNH + OH$ | .610E+20 | -2.46 | 1866. |
| 8. $NH_2 + O_2 = HNO + OH$ | .510E+14 | 0.0 | 30000. |
| 9. $NNH + NH_2 = N_2 + NH_3$ | .100E+14 | 0.0 | 0. |
| 10. $NH_2 + O = NH + OH$ | .170E+14 | 0.0 | 1000. |
| 11. $NH_2 + OH = NH + H_2O$ | .549E+11 | 0.68 | 1290. |
| 12. $NH_2 + H = NH + H_2$ | .500E+12 | 0.5 | 2000. |
| 13. $NH + O_2 = NHO + O$ | .300E+14 | 0.0 | 3400. |
| 14. $H_2 + OH = H_2O + H$ | .220E+14 | 0.0 | 5150. |
| 15. $H + O_2 = OH + O$ | .220E+15 | 0.0 | 16300. |
| 16. $O + H_2 = OH + OH$ | .180E+11 | 1.0 | 8900. |
| 17. $H + HO_2 = OH + OH$ | .180E+11 | 0.0 | 1900. |
| 18. $O + HO_2 = O_2 + OH$ | .250E+15 | 0.0 | 1000. |
| 19. $OH + HO_2 = H_2O + O_2$ | .480E+15 | 0.0 | 1000. |
| 20. $OH + OH = O + H_2O$ | .500E+14 | 0.0 | 1090. |
| 21. $HO_2 + NO = NO_2 + OH$ | .630E+13 | 0.0 | -260. |
| 22. $H + NO_2 = NO + OH$ | .350E+15 | 0.0 | 1500. |
| 23. $O + NO_2 = NO + O_2$ | .100E+14 | 0.0 | 600. |
| 24. $H + O_2 + M = HO_2 + M$ $H_2O/21$** | .150E+16 | 0.0 | -995. |
| 25. $NNH + M = N_2 + H + M$ | .200E+15 | 0.0 | 30000. |
| 26. $NO_2 + M = NO + O + M$ | .110E+17 | 0.0 | 66000. |
| 27. $NH_3 + M = NH + H + M$ | .480E+17 | 0.0 | 93929. |
| 28. $O + O + M = O_2 + M$ | .138E+19 | -1.0 | 340. |
| 29. $NH_3 + NO = N_2 + H_2O$ | .910E+20 | -2.46 | 1866. |
| 30. $NNH + OH = N_2 + H_2O$ | .300E+14 | 0.0 | 0. |
| 31. $NNH + NO = N_2 + HNO$ | .906E+12 | 0.0 | 0. |

**i.e., $A = 21$ x .15E+16 for $H_2O$ as "third body". The "third body" may be any other constituent present.

In the practice of the present invention the content of NO, $O_2$, and $H_2O$ in the effluent stream to be treated is measured or estimated. These initial conditions, as well as measurements or estimates of temperatures in the range of 1100°K (827°K) to 1500°K (1227°K) at superatmospheric pressures are used in conjunction with the kinetic model hereof with appropriate software to determine the amount of ammonia and an injection point which will give the desired NO reduction. Appropriate software suitable for use herein would be any computer program designed for numerical integration of chemical rate expressions. A non-limiting example of such software is CHEMKIN; A General-Purpose, Problem-Independent, Transportable, Fortran Chemical Kinetics Code Package; R. J. Kee, J. A. Miller, and T. H. Jefferson, an unlimited released Sandia National Laboratory Report SAND80-8003 (1980). This report is also available through the National Technical Information Service, U.S. Department of Commerce.

The advantages of the kinetic computer model hereof are substantial in that it permits one skilled in the art to readily determine, by calculation, the embodiment of the present invention which will yield optimum results for the particular circumstances. In general, however, it may be said that the present invention is an improved method of noncatalytic reduction of NO with $NH_3$. The improvement of the present invention relates to the temperature, residence time and pressure at which the $NH_3$ is contacted with the NO containing combustion effluents. This contacting is done in the combustion zone at temperatures from 1100°K (827°C) to 1500°K (1227°C), and where enough ammonia is present such that the volume ratio of ammonia to NO is in the range of 0.4 to 10. Generally, the ammonia can be injected up to 0.04 seconds upstream from a cooling zone, depending upon the combustion effluent temperature. The upper portion of the 1100°K (827°C) to 1500°K (1227°C) temperature range relates to higher initial NO concentrations, lower $O_2$ content of the combustion effluents, higher cooling rates and shorter delay times prior to cooling. To a somewhat lesser degree, the upper portion of the temperature range is also associated with higher $H_2O$ content.

As used here in the term "contacting zone" refers to that portion of the turbine in which the ammonia injected and the $NO_x$ present in the combustion effluent may interact. Where ammonia is injected into the combustion zone, the contacting zone will comprise the entire blade section and that portion of the combustion section in which the ammonia is present.

### Example of Use of Kinetic Model

To illustrate the practice of the present invention and its advantages over the prior art the paper example below is presented.

For illustration, a gas turbine engine is assumed with the following operating conditions, which can be considered normal for such engines: An excess air level of 235% of stoichiometric air while firing a fuel gas of H to C mol ratio of 4.0. The boiler thus produces a flue gas containing 14.3% $O_2$, 3.03% $CO_2$, 6.06% $H_2O$ and 76.64% $N_2$. There will also be traces of NO, the exact amount depending on the nitrogen content of the fuel and the manner in which the fuel is burned. For this example the NO level will be assumed to be 200 vppm, the pressure 13.6 atmospheres (1.37845 MPa), the residence time 0.005 seconds prior to cooling, and the time in the cooling zone 0.006 seconds. Further, it is assumed there will be a trace of the free radicals OH and O, the exact concentrations of these being determined by thermodynamic equilibrium and, therefore, being a function of temperature.

Combustion flue gas would exit the combustors at a very high temperature and would be cooled with secondary air as it passes to the fan section. In this example it is assumed that the gas turbine has an isothermal zone between the last entry of dilution air in the combustor and the entry into the blade section wherein the temperature is approximately 1379°K (1106°C), the residence time of the flue gas within this cavity being 0.005 seconds, and the amount of ammonia injected is 400 vppm. The resulting $NO_x$ reduction under these conditions is 56% as calculated from the kinetic model.

By comparison, following the teachings of US-A-3,900,554 and 4,115,515, at one atmosphere (0.101356 MPa), one would inject $NH_3$ as the flue gas enters the isothermal zone upstream of the blades. Assuming the amount of $NH_3$ injection, the amount of NO in the flue gas, and the time/temperature relationship of the flue gas is the same as in the previous case, the resulting model calculations for $NO_x$ reduction under these conditions is only 31.1%.

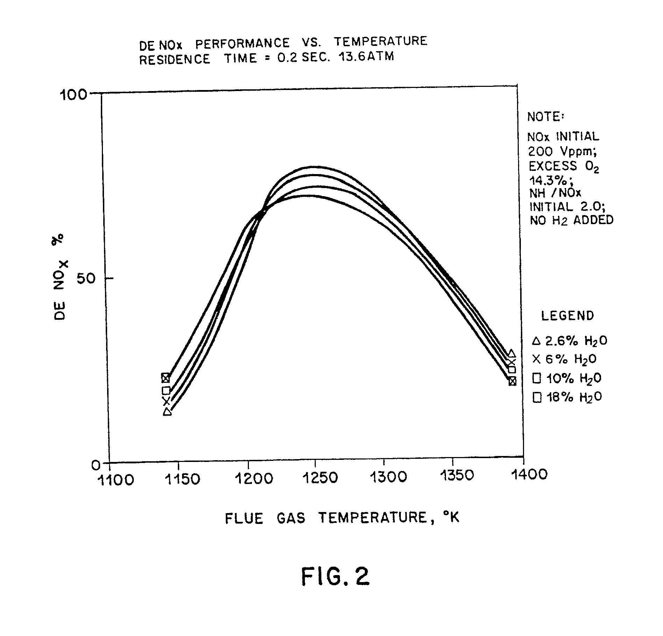

In order to graphically illustrate this invention and the effects of pressure upon the calculated level of $NO_x$ reduction, Figures 1 and 2 present the results of two separate sets of calculations. Both series of calculations were run assuming a constant flue gas temperature for the entire 0.02 second residence time, with varying flue gas water contents. One series of calculations presented in Table II and Figure 1 were run for ammonia contacting at atmospheric pressure (0.101356 MPa). A second set of calculations presented in Table III and Figure 2 were run for ammonia contacting at 13.6 atmosphere (1.37845 MPa). All other conditions are identical. It should be noted that at the 20 ms residence time chosen for this illustration, about a 100% $DeNO_x$ improvement is achieved at the higher pressure. Also, it should be noted from the figures that increasing water content in the flue gas is very detrimental at one atmosphere pressure (0.101356 MPa), but has minimal effect at higher pressure. This discovery suggests injection of $H_2O$, which may be utilized to decrease temperature peaks and $NO_x$ content of the combustion effluent, in combination with the injection of $NH_3$ at the exit of the combustor achieves very high $NO_x$ reductions in the typical gas turbine.

## TABLE II

### $DeNO_x$ PERFORMANCE VS. TEMPERATURE AT 1.0 ATMOSPHERE(0.101356 MPa)

Flue Gas Conditions for This Calculation:

Pressure - 1.0 atmospheres (0.101356 MPa)
Residence time - 0.020 sec.
Initial $NO_x$ Concentration - 200 vppm
$NH_3/NO_x$ (mole ratio) - 2.0
Excess $O_2$ Concentration- 14.3%
$H_2O$ Concentration- 2.6%, 6%, 10%, 18%

### % $NO_x$ Reduction

$H_2O$ Content in Flue Gas, %

| Flue Gas Temperature, ($^{O}K$)$^{O}C$ | 2.6 | 6 | 10 | 18 |
|---|---|---|---|---|
| (1144)871 | 13.6 | 10.3 | 8.1 | 6.0 |
| (1172)899 | 28.1 | 20.9 | 15.7 | 11.1 |
| (1200)927 | 41.4 | 32.2 | 24.7 | 17.3 |
| (1227)954 | 51.0 | 42.1 | 34.3 | 25.4 |
| (1255)982 | 52.9 | 45.3 | 38.2 | 29.6 |
| (1283)1010 | 50.8 | 44.5 | 38.5 | 30.7 |
| (1311)1038 | 45.3 | 40.5 | 35.8 | 29.2 |
| (1339)1066 | 35.7 | 32.9 | 29.6 | 24.7 |
| (1366)1093 | 21.6 | 20.8 | 19.2 | 16.4 |
| (1394)1121 | 4.0 | 4.2 | 4.0 | 3.1 |

EP 0 196 842 B1

<u>TABLE III</u>

DeNO$_x$ PERFORMANCE VS. TEMPERATURE
<u>AT 13.6 ATMOSPHERES</u> (1.37845MPa)

Flue Gas Conditions for This Calculation:

Pressure - 13.6 atmospheres (1.37845 MPa)
Residence time - 0.020 sec.
NO$_x$ Concentration - 200 vppm
NH$_3$/NO$_x$ (mole ratio) - 2.0
Excess O$_2$ Concentration - 14.3%
H$_2$O Concentration - 2.6%, 6%, 10%, 18%

% NO$_x$ Reduction

H$_2$O Content in Flue Gas, %

| Flue Gas Temperature, (°K)°C | 2.6 | 6 | 10 | 18 |
|---|---|---|---|---|
| (1144)871 | 13.7 | 15.7 | 17.9 | 22.2 |
| (1172)899 | 29.6 | 32.1 | 35.3 | 41.4 |
| (1200)927 | 57.2 | 57.7 | 58.8 | 60.8 |
| (1227)954 | 77.5 | 74.6 | 72.4 | 70.6 |
| (1255)982 | 80.3 | 77.3 | 74.7 | 71.4 |
| (1283)1010 | 75.9 | 73.7 | 71.5 | 68.2 |
| (1311)1038 | 66.7 | 65.7 | 64.1 | 61.2 |
| (1339)1066 | 54.1 | 53.8 | 52.9 | 50.6 |
| (1366)1093 | 40.4 | 39.4 | 38.4 | 36.3 |
| (1394)1121 | 25.6 | 24.7 | 23.3 | 20.4 |

As shown in Tables II and III and in Figures 1 and 2, higher operating pressure produces the higher NO$_x$ reduction. The effect of increased H$_2$O concentration is to lower the maximum achievable deNO$_x$ only slightly.

As previously noted, the amount of ammonia added is a function, in part, of the ammonia breakthrough, i.e., maximum amount of ammonia which is allowed to be present in the exhaust gas from the turbine. While generally there are no regulations governing the maximum ammonia content of the turbine exit gas, from an operations and regulatory standpoint it is preferred to maintain the NH$_3$ breakthrough below about 100 vppm, preferably in the 53-100 vppm range.

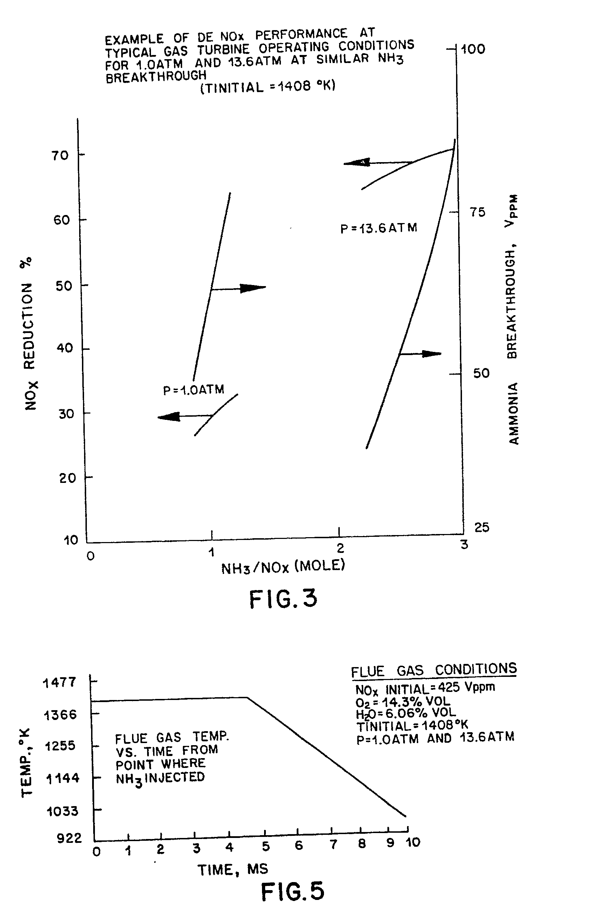

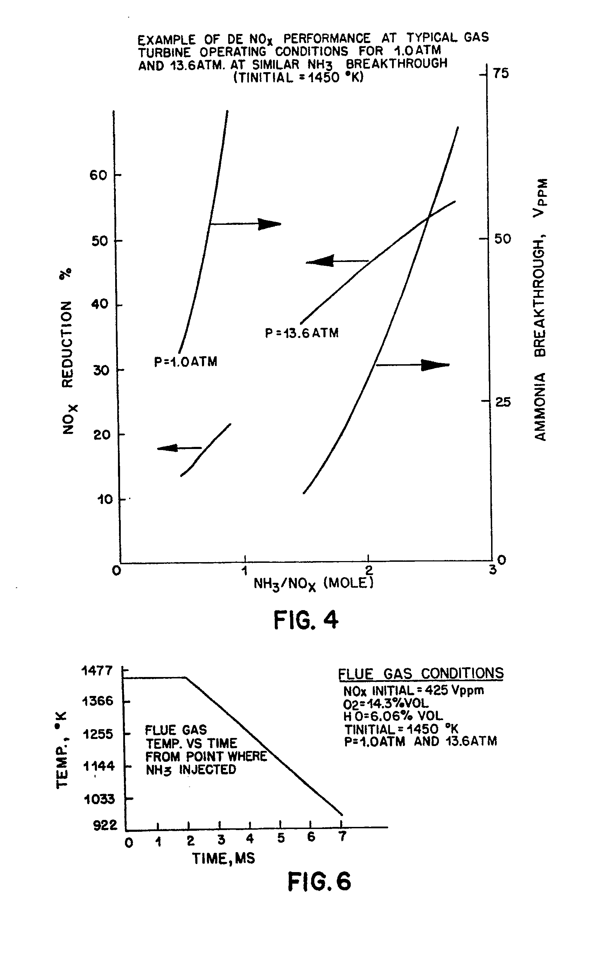

Figures 3 and 4 disclose a series of calculations on percentage of NO$_x$ reduction at about 1438°K (1135°C) and about 1450°K (1177°C). In both of these series of calculations the assumed flue gas conditions were as follows:
Initial NO$_x$ concentration 425 vppm
O$_2$ concentration 14.3 volume %
H$_2$O concentration 6.36 volume %

9

Figure 3, utilizing calculations at an initial temperature of about 1408°K (1135°C), illustrates the percentage of $NO_x$ reduction and the ammonia breakthrough, vppm, as a function of varying $NH_3:NO_x$ moleratios for 1 atmosphere (0.101356 MPa) and for 13.6 atmospheres (1.37845 MPa). Figure 5 graphically represents the combustion gas effluent temperature during the entire assumed 0.007 residence time in the contacting zone after ammonia injection. The relatively uniform temperature for the initial 0.002 seconds represents residence time in the combustion zone, while the remaining 0.005 seconds represents residence time in the fan section of the turbine. Figure 3 graphically illustrates that, at a given ammonia breakthrough, the $NO_x$ reduction at 13.6 atmospheres (1.37845 MPa) is considerably greater than at 1 atmosphere (0.101356 MPa). For example, if it were determined that the ammonia breakthrough should be a maximum of 60 vppm, at 1 atmosphere (0.101356 MPa) this would indicate use of a $NH_3:NO_x$ mole ratio of about 1 and a $NO_x$ reduction of about 28.5%. At 13.6 atmospheres (1.37845 MPa), maintaining a maximum 60 vppm breakthrough, Figure 3 indicates that a $NH_3:NO_x$ ratio of about 2.63:1 should be used, which will result in about a 67.5% $NO_x$ reduction.

In a similar manner, Figure 4 illustrates that if the ammonia breakthrough at 1450°K (1177°C) were to be maintained at a maximum of 50 vppm at 1 atmosphere (0.101356 MPa) would would require a $NH_3:NO_x$ mole ratio of about 0.73:1. Ammonia addition at this rate would reduce the $NO_x$ by about 18%. By comparison, if the same 50 vppm ammonia breakthrough were to be utilized at 13.6 atmospheres (1.37845 MPa), an $NH_3:NO_x$ mole ratio of about 2.48:1 could be utilized, resulting in a predicted $NO_x$ reduction of about 52.5%. Figure 6 represents the temperature profile for the entire 0.010 ms residence time in the contacting zone after ammonia injection. The relatively constant temperature for the first 0.005 seconds represents residence time in the combustion zone, while the remaining 0.005 seconds represents residence time in the fan section. Thus, it can be seen from the plots of Figures 3 and 4 that higher pressures permit higher $NH_3:NO_x$ molar ratios for the same ammonia breakthroughs and result in significantly greater $NO_x$ reductions.

The pressure in a gas turbine typically will range between 10 atmospheres (1.01356 Mpa) and 15 atmospheres (1.52035 MPa). The temperature will be a function of the specific type of turbine and the degree of loading. Typically, the maximum temperature in the turbine will range between 1350°K (1077°C) and 1450°K (1177°C). From the plots in Figures 3 and 4, it can be seen that the addition of $NH_3$ at these conditions can reduce $NO_x$ emissions significantly.

Since the actual $NO_x$ reduction achieved in a given situation is dependent upon the actual residence time of the $NH_3$ and $NO_x$ at the elevated temperature in the contacting zone, and since this temperature-time relationship changes with load, in any given situation it may be desirable to utilize multiple $NH_3$ injection locations utilized singularly or in combination to insure optimum $NO_x$ reduction for the expected range of operating conditions. The ammonia addition rate generally is determined by the degree of $NO_x$ removal desired and/or by the maximum permissible ammonia content in the exit gas, i.e., the ammonia breakthrough. The mol ratio of ammonia added to the contacting zone to the $NO_x$ entering the contacting zone ranges between 0.5:1 and 10:1, preferably between 3:1 and 1:1. The ammonia concentration exiting the contacting zone may range between 0 and 100 vppm. Since the $NH_3$ typically is added with a carrier gas to promote good mixing, and since the $NO_x$ reduction is dependent on the degree of $NO_xNH_3$ interaction, it may be advantageous to vary the quantity of the carrier gas while monitoring the $NO_x$ concentration in the exit gas to determine the optimum carrier gas quantity.

In summary, from the examples presented herein it has been shown that significant NO reductions can be achieved through injecting $NH_3$ into gas turbine combustors at the proper location corresponding to an optimum gas temperature in the range of from 1100-1500°K (827-1227°C) and elevated (10-15 atm., i.e., 1.01356 - 1.52035 MPa) pressure. It also has been demonstrated that simultaneous injection of $H_2O$ to achieve $NO_x$ reduction is compatible with $NH_3$ injection. Since $H_2O$ injection occurs upstream of the $NH_3$ injection, the reduction by $NH_3$ takes place subsequent to that achieved by $H_2O$ injection, and the increased $H_2O$ content of the flue gas has minimal impact on the $NH_3$ injection effectiveness.

## Claims

1. A process for reducing $NO_x$ concentration in combustion effluent from a gas turbine containing at least 0.1 volume percent $O_2$ which comprises contacting the said effluent with ammonia, characterised in that the effluent is contacted with ammonia at one or more locations upstream of the turbine or fan at a temperature in the range of from 1100°K (827°C) to 1500°K (1227°C), at a pressure in the range of from 10 to 100 atmospheres (1.0136 to 10.1357 MPa) and at a residence time in the range of from 20 to 30 milliseconds.

2. A process according to claim 1 in which water or steam also is injected into the combustion effluent.

3. A process according to claim 1 or claim 2 in which the said pressure is in the range of from 10 to 15 atmospheres (1.01357 to 1.52034 MPa).

4. A process according to any one of claims 1 to 3 in which the mol ratio of the ammonia added to the contacting zone to the $NO_x$ entering the contacting zone is in the range of from 0.5:1 to 10:1.

5. A process according to any one of claims 1 to 4 in which carrier gas is added to the contacting zone with the ammonia to promote intermixing of the ammonia with the combustion effluent.

6. A process according to any one of claims 1 to 5 in which multiple ammonia injection ports are disposed along the contacting zone and the point or points of ammonia addition varied or selected as necessary to reduce the $NO_x$ concentration in the combustion effluent.

7. A process according to any one of claims 1 to 6 wherein ammonia is injected in an amount and at a location determined by the solution of the set of simultaneous equations derived from the kinetic model of Table I hereof, which follows:

## TABLE I

KINETIC MODEL
Rate constant $K = AT^n \exp [-E/(1.98)T]$
M = Any Other Compound

| REACTION | A | n | E |
|---|---|---|---|
| 1. $NH_3 + H = NH_2 + H_2$ | .246E+14 | 0.0 | 17071. |
| 2. $NH_3 + O = NH_2 + OH$ | .150E+13 | 0.0 | 6040. |
| 3. $NH_3 + OH = NH_2 + H_2O$ | .326E+13 | 0.0 | 2120. |
| 4. $HNO + M = NO + H + M$ | .186E+17 | 0.0 | 48680. |
| 5. $HNO + OH = NO + H_2O$ | .360E+14 | 0.0 | 0. |
| 6. $NH_2 + HNO = NH_3 + NO$ | .175E+15 | 0.0 | 1000. |
| 7. $NH_2 + NO = NNH + OH$ | .610E+20 | -2.46 | 1866. |
| 8. $NH_2 + O_2 = HNO + OH$ | .510E+14 | 0.0 | 30000. |
| 9. $NNH + NH_2 = N_2 + NH_3$ | .100E+14 | 0.0 | 0. |
| 10. $NH_2 + O = NH + OH$ | .170E+14 | 0.0 | 1000. |
| 11. $NH_2 + OH = NH + H_2O$ | .549E+11 | 0.68 | 1290. |
| 12. $NH_2 + H = NH + H_2$ | .500E+12 | 0.5 | 2000. |
| 13. $NH + O_2 = NHO + O$ | .300E+14 | 0.0 | 3400. |
| 14. $H_2 + OH = H_2O + H$ | .220E+14 | 0.0 | 5150. |
| 15. $H + O_2 = OH + O$ | .220E+15 | 0.0 | 16800. |
| 16. $O + H_2 = OH + OH$ | .180E+11 | 1.0 | 8900. |
| 17. $H + HO_2 = OH + OH$ | .180E+11 | 0.0 | 1900. |
| 18. $O + HO_2 = O_2 + OH$ | .250E+15 | 0.0 | 1000. |
| 19. $OH + HO_2 = H_2O + O_2$ | .480E+15 | 0.0 | 1000. |
| 20. $OH + OH = O + H_2O$ | .500E+14 | 0.0 | 1090. |
| 21. $HO_2 + NO = NO_2 + OH$ | .630E+13 | 0.0 | -260. |
| 22. $H + NO_2 = NO + OH$ | .350E+15 | 0.0 | 1500. |
| 23. $O + NO_2 = NO + O_2$ | .100E+14 | 0.0 | 600. |
| 24. $H + O_2 + M = HO_2 + M$ | .150E+16 | 0.0 | -995. |
| $H_2O/21**$ | | | |
| 25. $NNH + M = N_2 + H + M$ | .200E+15 | 0.0 | 30000. |
| 26. $NO_2 + M = NO + O + M$ | .110E+17 | 0.0 | 66000. |
| 27. $NH_3 + M = NH + H + M$ | .480E+17 | 0.0 | 93929. |
| 28. $O + O + M = O_2 + M$ | .138E+19 | -1.0 | 340. |
| 29. $NH_3 + NO = N_2 + H_2O$ | .910E+20 | -2.46 | 1866. |
| 30. $NNH + OH = N_2 + H_2O$ | .300E+14 | 0.0 | 0. |
| 31. $NNH + NO = N_2 + HNO$ | .906E+12 | 0.0 | 0. |

**i.e., A=21 x .15E+16 for $H_2O$ as "third body". The "third body" may be any other constituent present.

**Revendications**

1. Procédé pour réduire la concentration de $NO_x$ dans les effluents de combustion d'une turbine à gaz contenant au moins 0,1 % en volume de $O_2$, qui consiste à mettre en contact ledit effluent avec de l'ammoniac, caractérisé en ce que l'effluent est mis en contact avec de l'ammoniac en un ou plusieurs points situés en amont de la turbine ou du ventilateur à une température comprise dans l'intervalle de 1100 à 1500° K (827 à 1227° C) sous une pression comprise dans l'intervalle de 1,0136 à 10,1357 MPa (10 à 100 atmosphères) et pendant un temps de séjour compris dans l'intervalle de 20 à 30 ms.

2. Procédé selon la revendication 1, dans lequel on injecte aussi de l'eau ou de la vapeur d'eau dans l'effluent de combustion.

3. Procédé selon la revendication 1 ou 2, dans lequel ladite pression est comprise dans l'intervalle de 1,01357 à 1,52034 MPa (10 à 15 atmosphères).

4. Procédé selon l'une quelconque des revendications 1 à 3, dans lequel le rapport en moles de l'ammoniac introduit dans la zone de contact au $NO_x$ pénétrant dans la zone de contact est compris dans l'intervalle de 0,5:1 à 10:1.

5. Procédé selon l'une quelconque des revendications 1 à 4, dans lequel un gaz porteur est introduit dans la zone de contact avec l'ammoniac pour favoriser le mélange réciproque de l'ammoniac et de l'effluent de combustion.

6. Procédé selon l'une quelconque des revendications 1 à 5, dans lequel plusieurs orifices d'injection d'ammoniac sont disposés le long de la zone de contact, et on fait varier ou bien on choisit le ou les points d'introduction de l'ammoniac selon ce qui est nécessaire pour réduire la concentration du $NO_x$ dans l'effluent de combustion.

7. Procédé selon l'une quelconque des revendications 1 à 6, dans lequel de l'ammoniac est injecté en une quantité et en un point déterminés par la solution de l'ensemble d'équations simultanées dérivant du modèle cinétique du Tableau I ci-après :

TABLEAU I

Modèle cinétique

Constante de vitesse $K = AT^n \exp[-E/(1,98)T]$

M = tout autre composé

| | Réaction | A | n | E |
|---|---|---|---|---|
| 1. | $NH_3+H = NH_2+H_2$ | 0,246E+14 | 0,0 | 17071 |
| 2. | $NH_3+O = NH_2+OH$ | 0,150E+13 | 0,0 | 6040 |
| 3. | $NH_3+OH = NH_2+H_2O$ | 0,326E+13 | 0,0 | 2120 |
| 4. | $HNO+M = NO+H+M$ | 0,186E+17 | 0,0 | 48680 |
| 5. | $HNO+OH = NO+H_2O$ | 0,360E+14 | 0,0 | 0 |
| 6. | $NH_2+HNO = NH_3+NO$ | 0,175E+15 | 0,0 | 1000 |
| 7. | $NH_2+NO = NNH+OH$ | 0,610E+20 | -2,46 | 1866 |
| 8. | $NH_2+O_2 = HNO+OH$ | 0,510E+14 | 0,0 | 30000 |
| 9. | $NNH+NH_2 = N_2+NH_3$ | 0,100E+14 | 0,0 | 0 |
| 10. | $NH_2+O = NH+OH$ | 0,170E+14 | 0,0 | 1000 |
| 11. | $NH_2+OH = NH+H_2O$ | 0,549E+11 | 0,68 | 1290 |
| 12. | $NH_2+H = NH+H_2$ | 0,500E+12 | 0,5 | 2000 |
| 13. | $NH+O_2 = NHO+O$ | 0,300E+14 | 0,0 | 3400 |
| 14. | $H_2+OH = H_2O+H$ | 0,220E+14 | 0,0 | 5150 |
| 15. | $H+O_2 = OHO$ | 0,220E+15 | 0,0 | 16800 |
| 16. | $O+H_2 = OH+OH$ | 0,180E+11 | 1,0 | 8900 |
| 17. | $H+HO_2 = OH+OH$ | 0,180E+11 | 0,0 · | 1900 |
| 18. | $O+HO_2 = O_2+OH$ | 0,250E+15 | 0,0 | 1000 |
| 19. | $OH+HO_2 = H_2O+O_2$ | 0,480E+15 | 0,0 | 1000 |
| 20. | $OH+OH = O+H_2O$ | 0,500E+14 | 0,0 | 1090 |
| 21. | $HO_2+NO = NO_2+OH$ | 0,630E+13 | 0,0 | -260 |
| 22. | $H+NO_2 = NO+OH$ | 0,350E+15 | 0,0 | 1500 |
| 23 | $O+NO_2 = NO+O_2$ | 0,100E+14 | 0,0 | 600 |
| 24. | $H+O_2+M = HO_2+M$ $H_2O/21**$ | 0,150E+16 | 0,0 | -995 |
| 25. | $NNH+M = N_2+H+M$ | 0,200E+15 | 0,0 | 30000 |
| 26. | $NO_2+M = NO+O+M$ | 0,110E+17 | 0,0 | 66000 |
| 27. | $NH_3+M = NH_2+H+M$ | 0,480E+17 | 0,0 | 93929 |
| 28. | $O+O+M = O_2+M$ | 0,138E+19 | -1,0 | 340 |
| 29. | $NH_3+NO = N_2+H_2O$ | 0,910E+20 | -2,46 | 1866 |
| 30. | $NNH+OH = N_2+H_2O$ | 0,300E+14 | 0,0 | 0 |
| 31. | $NNH+NO = N_2+HNO$ | 0,906E+12 | 0,0 | 0 |

** c'est-à-dire A = 21 x 0,15E+16 pour $H_2O$ en tant que
"tiers corps". Le "tiers corps" peut être tout autre
constituant présent.

## Patentansprüche

1. Verfahren zur Reduzierung der $NO_x$-Konzentration in aus einer Gasturbine austretenden Verbrennungsgasen, die mindestens 0,1 Vol.% $O_2$ enthalten, bei dem das austretende Gas mit Ammoniak kontaktiert wird, **dadurch gekennnzeichnet,** daß das austretende Gas an einer oder mehreren Stellen stromaufwärts von der Turbine oder dem Laufrad bei einer Temperatur im Bereich von 1100° K (827° C) bis 1500°K (1227°C), einem Druck im Bereich von 1,0136 bis 10,1357 MPa (10 bis 100 atm) und einer Verweilzeit im Bereich von 20 bis 30 ms mit Ammoniak kontaktiert wird.

2. Verfahren nach Anspruch 1, bei dem außerdem Wasser oder Dampf in das austretende Verbrennungsgas eingespritzt wird.

3. Verfahren nach Anspruch 1 oder Anspruch 2, bei dem der Druck im Bereich von 1,01357 bis 1,52034 MPa (10 bis 15 atm) liegt.

4. Verfahren nach einem der Ansprüche 1 bis 3, bei dem das Molverhältnis des der Kontaktzone zugeführten Ammoniaks zu dem in die Kontaktzone eintretenden $NO_x$ im Bereich von 0,5:1 bis 10:1 liegt.

5. Verfahren nach einem der Ansprüche 1 bis 4, bei dem ein Trägergas der Kontaktzone zusammen mit dem Ammoniak zugeführt wird, um das Vermischen des Ammoniaks mit dem austretenden Verbrennungsgas zu fördern.

6. Verfahren nach einem der Ansprüche 1 bis 5, bei dem entlang der Kontaktzone eine Vielzahl von Ammoniakeinspritzöffnungen verteilt sind und die Stelle oder die Stellen der Ammoniakzuführung je nach Bedarf variiert oder ausgewählt werden, um die $NO_x$-Konzentration in dem austretenden Verbrennungsgas zu verringern.

7. Verfahren nach einem der Ansprüche 1 bis 6, bei dem das Ammoniak in einer Menge und an einer Stelle eingespritzt wird, die durch die Lösung des Satzes gekoppelter Gleichungen, der sich aus dem kinetischen Modell der folgenden Tabelle 1 ableitet, bestimmt wird:

TABELLE I

KINETISCHES MODELL

Geschwindigkeitskonstante $K = AT^n \exp[-E/(1.98)T]$

M = jede andere Verbindung

|  | REAKTION | A | n | E |
|---|---|---|---|---|
| 1. | $NH_3+H=NH_2+H_2$ | 0,246E+14 | 0,0 | 17071 |
| 2. | $NH_3+O=NH_2+OH$ | 0,150E+13 | 0,0 | 6040 |
| 3. | $NH_3+OH=NH_2+H_2O$ | 0,326E+13 | 0,0 | 2120 |
| 4. | $HNO+M=NO+H+M$ | 0,186E+17 | 0,0 | 48680 |
| 5. | $HNO+OH=NO+H_2O$ | 0,360E+14 | 0,0 | 0 |
| 6. | $NH_2+HNO=NH_3+NO$ | 0,175E+15 | 0,0 | 1000 |
| 7. | $NH_2+NO=NNH+OH$ | 0,610E+20 | -2,46 | 1866 |
| 8. | $NH_2+O_2=HNO+OH$ | 0,510E+14 | 0,0 | 30000 |
| 9. | $NNH+NH_2=N_2+NH_3$ | 0,100E+14 | 0,0 | 0 |
| 10. | $NH_2+O=NH+OH$ | 0,170E+14 | 0,0 | 1000 |
| 11. | $NH_2+OH=NH+H_2O$ | 0,549E+11 | 0,68 | 1290 |
| 12. | $NH_2+H=NH+H_2$ | 0,500E+12 | 0,5 | 2000 |
| 13. | $NH+O_2=NHO+O$ | 0,300E+14 | 0,0 | 3400 |
| 14. | $H_2+OH=H_2O+H$ | 0,220E+14 | 0,0 | 5150 |
| 15. | $H+O_2=OH+O$ | 0,220E+15 | 0,0 | 16800 |
| 16. | $O+H_2=OH+OH$ | 0,180E+11 | 1,0 | 8900 |
| 17. | $H+HO_2=OH+OH$ | 0,180E+11 | 0,0 | 1900 |
| 18. | $O+HO_2=O_2+OH$ | 0,250E+15 | 0,0 | 1000 |
| 19. | $OH+HO_2=H_2O+O_2$ | 0,480E+15 | 0,0 | 1000 |
| 20. | $OH+OH=O+H_2O$ | 0,500E+14 | 0,0 | 1090 |

| | REAKTION | A | n | E |
|---|---|---|---|---|
| 21. | $HO_2+NO=NO_2+OH$ | 0,630E+13 | 0,0 | −260 |
| 22. | $H+NO_2=NO+OH$ | 0,350E+15 | 0,0 | 1500 |
| 3. | $O+NO_2=NO+O_2$ | 0,100E+14 | 0,0 | 600 |
| 24. | $H+O_2+M=HO_2+M$ $H_2O/21^{1)}$ | 0,150E+16 | 0,0 | −995 |
| 25. | $NNH+M=N_2+H+M$ | 0,200E+15 | 0,0 | 30000 |
| 26. | $NO_2+M=NO+O+M$ | 0,110E+17 | 0,0 | 66000 |
| 27. | $NH_3+M=NH+H+M$ | 0,480E+17 | 0,0 | 93929 |
| 28. | $O+O+M=O_2+M$ | 0,138E+19 | −1,0 | 340 |
| 29. | $NH_3+NO=N_2+H_2O$ | 0,910E+20 | −2,46 | 1866 |
| 30. | $NNH+OH=N_2+H_2O$ | 0,300E+14 | 0,0 | 0 |
| 31. | $NNH+NO=N_2+HNO$ | 0,906E+12 | 0,0 | 0 |

[1] d.h., A = 21 x 0,15E+16 für $H_2O$ als "dritter Körper". Der "dritte Körper" kann jeder andere vorhandene Bestandteil sein.

DE NOx PERFORMANCE  VS.  TEMPERATURE
RESIDENCE  TIME = 0.02 SEC. 1.0ATM

NOTE:
NOx INITIAL
200 Vppm;
EXCESS $O_2$
14.3%;
$NH_3$/NOx
INITIAL 2.0;
NO $H_2$ ADDED

LEGEND

△ 2.6% $H_2O$

✕ 6%  $H_2O$

☐ 10% $H_2O$

⊠ 18% $H_2O$

FIG. 1

DE NOx PERFORMANCE VS. TEMPERATURE
RESIDENCE TIME = 0.2 SEC. 13.6 ATM

NOTE:

NOx INITIAL
200 Vppm;
EXCESS $O_2$
14.3%;
NH /NOx
INITIAL 2.0;
NO $H_2$ ADDED

LEGEND

△ 2.6% $H_2O$
X 6% $H_2O$
□ 10% $H_2O$
□ 18% $H_2O$

FLUE GAS TEMPERATURE, °K

FIG. 2

19

EXAMPLE OF DE NOx PERFORMANCE AT
TYPICAL GAS TURBINE OPERATING CONDITIONS
FOR 1.0ATM AND 13.6ATM AT SIMILAR NH₃
BREAKTHROUGH
(TINITIAL =1408 °K)

P =13.6 ATM

P =1.0ATM

NO$_x$ REDUCTION %

AMMONIA BREAKTHROUGH, V$_{PPM}$

NH₃/NOx (MOLE)

## FIG.3

FLUE GAS TEMP.
VS. TIME FROM
POINT WHERE
NH₃ INJECTED

FLUE GAS CONDITIONS
NO$_x$ INITIAL= 425 Vppm
O₂ = 14.3% VOL
H₂O = 6.06% VOL
TINITIAL = 1408°K
P=1.0ATM AND 13.6ATM

TEMP.,°K

TIME, MS

## FIG.5

EP 0 196 842 B1

EXAMPLE OF DE NO$_x$ PERFORMANCE AT TYPICAL GAS
TURBINE OPERATING CONDITIONS FOR 1.0 ATM
AND 13.6 ATM. AT SIMILAR NH$_3$ BREAKTHROUGH
(TINITIAL = 1450 °K)

FIG. 4

FIG. 6

FLUE GAS CONDITIONS
NO$_x$ INITIAL = 425 Vppm
O$_2$ = 14.3% VOL
H O = 6.06% VOL
TINITIAL = 1450 °K
P = 1.0 ATM AND 13.6 ATM

FLUE GAS
TEMP. VS TIME
FROM POINT WHERE
NH$_3$ INJECTED